# EUROPEAN PATENT APPLICATION

(11) **EP 4 629 585 A1**
(43) Date of publication of application: **08.10.2025**
(21) Application number: 23910303.9
(22) Date of filing: 20.12.2023
(51) Int. Cl.: H04L 45/30

(54) **INFORMATION PROCESSING METHOD, DEVICE, AND STORAGE MEDIUM**

(30) Priority: 30.12.2022 CN 202211726796
(71) Applicant: ZTE Corporation, Shenzhen, Guangdong 518057 (CN)
(72) Inventor: CHEN, Ran, Shenzhen, Guangdong 518057 (CN); ZHAO, Detao, Shenzhen, Guangdong 518057 (CN); ZHU, Xiaolong, Shenzhen, Guangdong 518057 (CN)
(74) Representative: Savi, Massimiliano
(86) International application number: PCT/CN2023/140331
(87) International publication number: WO 2024/140374

(57) **Abstract**

The present application provides an information processing method, a device, and a storage medium. The method comprises: a path calculation unit or a controller sends a segment routing (SR) Policy group to a network node, wherein the SR Policy group comprises a plurality of constituent SR Policies, and the constituent SR Policies carry mapping relationships between attribute information and the constituent SR Policies, so that, after receiving a data packet, the network node determines, from a preset SR Policy group and according to attribute information carried in the data packet and the mapping relationships between the attribute information and constituent SR Policies, a constituent SR Policy corresponding to the attribute information, and then forwards the data packet on the basis of the corresponding constituent SR Policy.

## Description

### CROSS-REFERENCE TO RELATED APPLICATION

The present disclosure is filed on the basis of Chinese patent application No. 202211726796.X filed December 30, 2022, and claims priority of the Chinese patent application, the entire contents of which are incorporated herein by reference.

### TECHNICAL FIELD

The present disclosure relates to the technical field of communications, and in particular, to an information processing method, device, and storage medium.

### BACKGROUND

A composite candidate path is similar to a container for a Segment Routing (SR) Policy group, i.e., a composite candidate path is a combination of multiple constituent SR Policies. Each SR Policy group may include one or more constituent SR Policies. Currently, composite candidate paths only support load sharing functions. However, if different service flows of the same user have different network requirements, different forwarding paths or network resources might be adopted. In such cases, it becomes necessary to direct different service flows to different constituent SR Policies, or to distribute different packets of the same service across multiple constituent SR Policies. However, the current technology lacks a concrete implementation to direct such service flows accordingly.

### SUMMARY

The embodiment of the present disclosure provides an information processing method, a network device, a computer-readable storage medium, and a computer program product, which are adopted to establish a mapping relationship between a constituent SR Policy and attribute information of a data packet, so as to facilitate directing different service flows to different constituent SR Policies.

In a first aspect, an embodiment of the present disclosure provides an information processing method, which includes:
receiving, by a network node, a data packet and obtaining attribute information carried by the data packet;
determining, by the network node, a constituent SR Policy corresponding to the attribute information, from a preset SR Policy group, according to a mapping relationship between the attribute information and the constituent SR Policy; and
forwarding, by the network node, the data packet according to the constituent SR Policy corresponding to the attribute information.

In a second aspect, an embodiment of the present disclosure provides an information processing method, which includes:
sending, by a path computation element or a controller, an SR Policy group to a network node, where the SR Policy group includes a plurality of constituent SR Policies, the constituent SR Policy carries a mapping relationship between attribute information and the constituent SR Policy.

In a third aspect, an embodiment of the present disclosure provides a network device, which includes:
at least one processor;
at least one memory configured to store at least one program;
where the at least one program is configured to implement, when executed by the at least one processor, the information processing method of the first aspect or the second aspect.

In a fourth aspect, an embodiment of the present disclosure provides a computer-readable storage medium storing a program executable by a processor, where the program is configured to implement, when executed by the processor, the information processing method of the first aspect or the second aspect.

In a fifth aspect, an embodiment of the present disclosure provides a computer program product, which includes a computer program or computer instructions stored on a computer-readable storage medium, where the computer program or computer instructions is readable by and cause a processor of a network device to perform the information processing method of the first aspect or the second aspect.

According to the technical schemes of the embodiments of the present disclosure, the path computation element or the controller sends an SR Policy group to the network node, where the SR Policy group includes multiple constituent SR Policies, and each constituent SR Policy carries a mapping relationship between attribute information and the constituent SR Policy. This allows the network node, upon receiving a data packet, to determine the corresponding constituent SR Policy from the preset SR Policy group based on the attribute information carried by the data packet and the mapping relationship between the attribute information and the constituent SR Policy, and then forward the data packet based on the corresponding constituent SR Policy. Therefore, these technical schemes support directing different service flows to different constituent SR Policies.

### BRIEF DESCRIPTION OF DRAWINGS

Fig. 1 is a schematic diagram of a network architecture applicable to an embodiment of the present disclosure;
Fig. 2 is a flowchart illustrating an information processing method provided in an embodiment of the present disclosure;
Fig. 3 is a flowchart illustrating another information processing method provided in another embodiment of the present disclosure;
Fig. 4 is a schematic diagram showing the format of an SR Policy Sub-TLV according to an embodiment of the present disclosure;
Fig. 5 is a schematic diagram showing the format of a Composite Sub-TLV according to an embodiment of the present disclosure;
Fig. 6 is a schematic diagram showing the format of a Sub-TLV configured for carrying a load balancing weight value according to an embodiment of the present disclosure;
Fig. 7 is a schematic diagram showing the format of a Sub-TLV configured for carrying a DSCP segment according to an embodiment of the present disclosure;
Fig. 8 is a schematic diagram showing the format of a Range Sub-sub-TLV according to an embodiment of the present disclosure;
Fig. 9 is a schematic diagram showing the format of a Sub-TLV configured for carrying service-class information according to an embodiment of the present disclosure;
Fig. 10 is a schematic diagram showing the format of an SR Policy Association Object according to an embodiment of the present disclosure;
Fig. 11 is a schematic diagram showing the format of a Sub-TLV configured for carrying a load balancing weight value according to an embodiment of the present disclosure;
Fig. 12 is a schematic diagram showing the format of a Sub-TLV configured for carrying a DSCP segment according to an embodiment of the present disclosure;
Fig. 13 is a schematic diagram showing the format of a Range Sub-sub-TLV according to an embodiment of the present disclosure;
Fig. 14 is a schematic diagram showing the format of a Sub-TLV configured for carrying service-class information according to an embodiment of the present disclosure;
Fig. 15 is a schematic diagram showing the format of a color Sub-TLV according to an embodiment of the present disclosure;
Fig. 16 is a flowchart illustrating another information processing method provided in an embodiment of the present disclosure;
Fig. 17 is a schematic diagram showing the format of a Link_State Attribute according to an embodiment of the present disclosure;
Fig. 18 is a schematic diagram showing the format of an SR Segment List Sub-TLV configured for carrying a load balancing weight value according to an embodiment of the present disclosure;
Fig. 19 is a schematic diagram showing the format of an SR Segment List Sub-TLV configured for carrying a DSCP segment according to an embodiment of the present disclosure;
Fig. 20 is a schematic diagram showing the format of a Range Sub-sub-TLV according to an embodiment of the present disclosure;
Fig. 21 is a schematic diagram showing the format of an SR Segment List Sub-TLV configured for carrying service-class information according to an embodiment of the present disclosure;
Fig. 22 is a schematic diagram showing the format of a color Sub-TLV according to an embodiment of the present disclosure;
Fig. 23 is a schematic diagram showing the structure of a network device according to an embodiment of the present disclosure.

### DETAILED DESCRIPTION

In order to make the objectives, technical schemes and advantages of the present disclosure clear, the present disclosure will be further described in detail below in conjunction with the drawings and embodiments. It should be understood that the specific embodiments described herein are only used to explain the present disclosure and are not to limit the present disclosure.

It should be noted that in the description of the embodiments of the present disclosure, terms such as "first," "second," etc. are merely used to distinguish technical features and should not be interpreted as indicating or implying relative importance, or implicitly indicating the number of technical features, or the sequence in which the technical features are referenced. "At least one" refers to one or more, and "multiple" refers to two or more. "And/or" describes the relationship between associated objects, indicating that three relationships can exist, such as A and/or B, which can represent cases where A exists alone, A and B exist simultaneously, or B exists alone. Here, A and B can be singular or plural. The character "/" generally indicates an "or" relationship between the objects before and after it. "At least one of the following" and similar expressions refer to any group from these items, including any combination of single or plural items. For example, at least one of a, b, or c can represent: a, b, c, a and b, a and c, b and c, or a, b, and c, where a, b, and c can be singular or plural.

Furthermore, the technical features involved in the various embodiments described below can be combined with each other as long as they do not conflict with each other.

The composite candidate path is similar to a container of the SR Policy group, i.e., the composite candidate path is a combination of multiple SR Policies. This combination structure has one or more member SRv6 Policies under a parent SRv6 Policy. Each SR Policy group contains one or more constituent SR Policies. The principles for constructing a composite candidate path include:
(1) One or more member SRv6 Policies in the composite candidate path must have the same head and tail nodes as the parent SRv6 Policy;
(2) The colors of one or more member SRv6 Policies in the composite candidate path must differ from the color of the parent SRv6 Policy;
(3) One or more member SRv6 Policies in the composite candidate path must not reuse the composite candidate path;
(4) Each member SRv6 Policy in the composite candidate path is associated with a weight, which is configured for load balancing.

Currently, the composite candidate path can only achieve load-sharing functionality. The candidate paths corresponding to the constituent SR Policies in the composite candidate path share the carried services based on their weights. Generally, SR Policies implement traffic engineering by pushing a segment list into the head node. The SR Policy described in this embodiment may refer to SRv6 Policy. The Segment List encodes any forwarding path for data packets in the network. The path computation element or controller sends the SRv6 Policy to the head node through protocols like Border Gateway Protocol (BGP), Path Computation Element Protocol (PCEP), etc., or it can statically configure the SRv6 Policy on the head node. For deterministic requirements, the path computation element or the controller may also carry deterministic path information when sending the SRv6 Policy to the head node, and the head node forwards deterministic packet flows based on this deterministic path information.

An SRv6 Policy is identified by a tuple <head node, color, tail node>. Each SRv6 Policy may include multiple candidate paths. These candidate paths are based on SRv6, and the segment lists in the candidate paths are encapsulated in the Segment Routing Header (SRH). Each candidate path has a preference value, where a higher preference value means a more preferred path. The candidate paths may include multiple segment lists, each having a weight. In the SRv6 Policy, the highest-priority and valid candidate path is selected as the active candidate path, and the multiple segment lists in the active candidate path share the load based on their weights.

In practical applications of composite candidate paths, if different service flows of the same user have different network requirements, there might be situations where different service flows have different forwarding paths, as well as differences in utilization of the network resources during forwarding. In such cases, it is necessary to direct different service flows of the user to different constituent SR Policies, or direct different packet flows of the same service to different constituent SR Policies. However, existing technologies do not provide a specific solution for directing service flows with different requirements to different constituent SR Policies.

In light of this, the embodiments of the present disclosure provide an information processing method, network device, computer-readable storage medium, and computer program product to establish a mapping relationship between constituent SR Policies and data packet attribute information, thereby enabling the directing of different service flows to different constituent SR Policies.

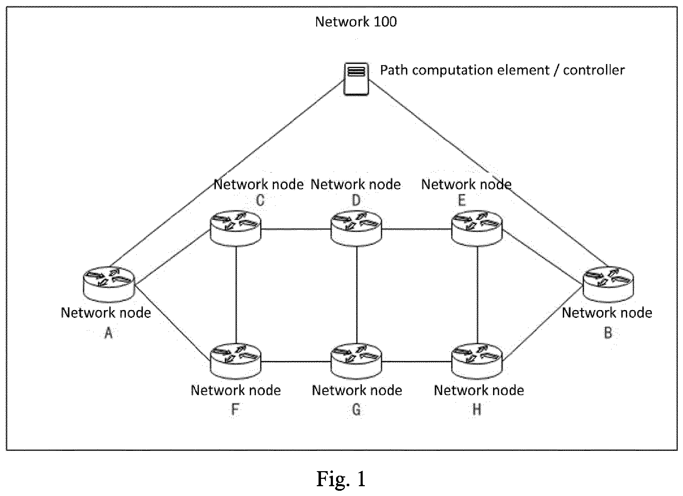

Before introducing the technical schemes of the embodiments of the present disclosure, an exemplary description of the application scenario of the embodiments is provided. Refer to Fig. 1, which is a schematic diagram of a network architecture applicable to an embodiment of the present disclosure. The network 100 shown in Fig. 1 includes multiple network devices. These network devices include a path computation element/controller and multiple network nodes. The path computation element/controller is a device capable of calculating paths that meet constraints based on network topology information, and it can be a routing device or an independent server. The network nodes are devices that perform routing and forwarding functions, and can include routers, switches, and forwarders. These devices can be physical devices or virtualized devices (such as virtual servers, virtual routers, virtual switches, or virtual forwarders). Depending on the deployment location and role of the network device in the network, the network devices can also be referred to as Provider Edge (PE) devices or Provider (P) devices. For example, nodes A and B in Fig. 1 belong to PE devices, while nodes C, D, E, F, G, and H belong to P devices. It should be noted that, in the embodiments of the present disclosure, according to the direction of data packet transmission, the starting node of the transmission path is referred to as the head node/in-node, the endpoint of the transmission path is referred to as the destination node/out-node, and the P devices in the middle of the transmission path are referred to as intermediate nodes. It should be clarified that the number of intermediate nodes in Fig. 1 is merely illustrative. In practical applications, the number of intermediate nodes may be one or more. Additionally, the network devices in Fig. 1 can transmit data packets based on the Internet Protocol (IP) or Multiprotocol Label Switching (MPLS) protocols.

The embodiments described in the present disclosure can be applied in communication systems, such as at least one of the following systems: Global System for Mobile Communications (GSM) or any other second-generation cellular communication system, Universal Mobile Telecommunications System (UMTS, 3G) based on Wideband Code Division Multiple Access (W-CDMA), High-Speed Packet Access (HSPA), Long-Term Evolution (LTE), Advanced LTE, systems based on the IEEE 802.11 standard, systems based on the IEEE 802.15 standard, and/or Fifth-Generation (5G) mobile or cellular communication systems; and future mobile communication systems. However, the embodiments are not limited to the systems provided in the examples above, and those having ordinary skills in the art can apply the technical schemes to other communication systems with the necessary attributes.

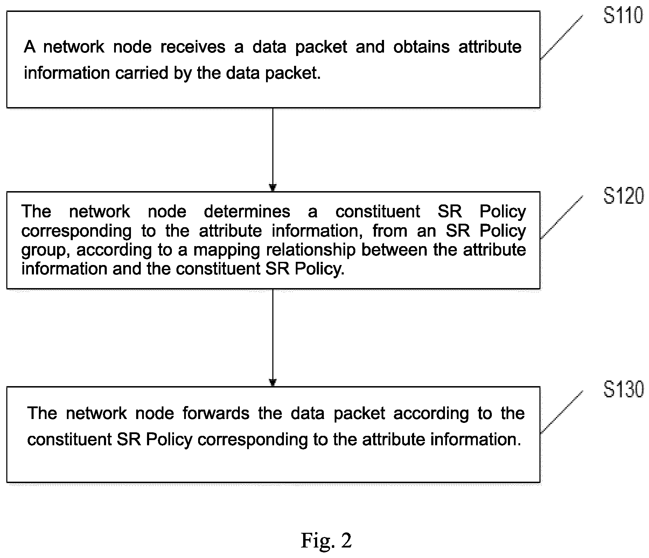

Refer to Fig. 2, which is a flowchart of an information processing method provided in an embodiment of the present disclosure. The method includes, but is not limited to, the following steps S110 to S130:
In a step of S110, a network node receives a data packet and obtains attribute information carried by the data packet.

It can be understood that the network node here refers to the head node in the network. For example, the head node receives a user data packet from the Customer Edge (CE) device, and the received data packet carries attribute information configured to identify the attributes of the data packet. For example, the attribute information may be located in the IP header of the data packet. When the network node receives the data packet, it extracts the corresponding attribute information from the IP header, and then determines an active candidate path of the data packet based on the attribute information. The attribute information carried by the data packet may include any of the following: source MAC address, destination MAC, Virtual LAN (VLAN), Type of Service (TOS), source Internet Protocol (IP), destination IP, Differentiated Services Code Point (DSCP), port number, application layer attributes, or service-class.

In a step of S120, the network node determines a constituent SR Policy corresponding to the attribute information, from a predefined SR Policy group, based on a mapping relationship between the attribute information and the constituent SR Policy.

In some implementations, before the step S120, the method further includes: receiving, by the network node, an SR Policy group from a path computation element or a controller, where the SR Policy group includes multiple constituent SR Policies, and each constituent SR Policy carries a mapping relationship between the attribute information and the constituent SR Policy.

It can be understood that the path computation element or the controller pre-issues the mapping relationship between the attribute information and the constituent SR Policy to the network node, so that when the network node receives a data packet, it can determine the corresponding constituent SR Policy from the SR Policy group based on the attribute information carried by the data packet and the previously obtained mapping relationship between the attribute information and the constituent SR Policy.

In some implementations, the path computation element or the controller sends the SR Policy group to the network node by adopting protocols such as BGP, PCEP, or YANG model.

It should be understood that the mapping relationship between the attribute information and the constituent SR Policy can also be pre-configured in the network node, so that the network node, after receiving the data packet, can determine the constituent SR Policy corresponding to the currently received data packet, from the SR Policy group, based on the attribute information corresponding to the data packet and the pre-configured mapping relationship between the attribute information and the constituent SR Policy.

It is important to note that the mapping relationship between attribute information and the SR Policy can be a direct mapping or an indirect mapping. A direct mapping means that the attribute information directly maps to a constituent SR Policy, while an indirect mapping means that the attribute information maps to the constituent SR Policy through an index.

In a step of S130, the network node forwards the data packet based on the constituent SR Policy corresponding to the attribute information.

It can be understood that after determining the constituent SR Policy corresponding to the currently received data packet, the network node executes a forwarding process according to the corresponding constituent SR Policy.

The mapping relationship between the attribute information and the constituent SR Policy may include: mapping type information and mapping attribute relationship information. The mapping type information indicates the mapping type of the constituent SR Policy, and includes one of the following types: load balancing type, DSCP type, or Class-of-service Based Tunnel Selection (CBTS) type. The mapping attribute relationship information indicates the relationship between the constituent SR Policy and the mapping type.

For example, if the mapping type information of a constituent SR Policy is load balancing type/DSCP type/CBTS type, the mapping attribute relationship information is configured to indicate the relationship between the constituent SR Policy and the mapping type (e.g., load balancing, DSCP, or CBTS). Based on this mapping relationship, an index corresponding to the constituent SR Policy in the load balancing type/DSCP type/CBTS type can be obtained, or the corresponding attribute information can be directly obtained.

In an example, the attribute information carried by the data packet includes any of the following: source Media Access Control (MAC), destination MAC, Virtual Local Area Network (VLAN), Type of Service (TOS), source Internet Protocol (IP), destination IP, DSCP, port number, application layer attributes, or service-class.

In some implementations, for the source MAC, destination MAC, VLAN, TOS, source IP, destination IP, port number, or application layer attributes, a mapping relationship is established between the index and the constituent SR Policy. In other words, for the above types of attribute information, an index can be initially established for the attribute information, and then the mapping relationship between the attribute information and the constituent SR Policy is created through the index.

For example, the attribute information carried by the currently received data packet is the source MAC (11:11:11:11:11:11). First, the corresponding index is obtained based on this source MAC. It is assumed that the obtained index indicates that the load balancing weight value corresponding to the source MAC is 2. The constituent SR Policy mapped to the load balancing weight value "2" under the load balancing type is then searched, and the search result is determined as the constituent SR Policy corresponding to the data packet.

In some implementations, for DSCP or service-class type attribute information, a direct mapping relationship is established with the constituent SR Policy.

For example, if the attribute information carried by the currently received data packet is DSCP, and the DSCP equals "000000," the constituent SR Policy mapped to DSCP "000000" under the DSCP type is then searched, and the search result is determined as the constituent SR Policy corresponding to the data packet.

For example, if the attribute information carried by the currently received data packet is service-class, and the service-class equals "8," the constituent SR Policy mapped to the service-class "8" under the DSCP type is then searched, and the search result is determined as the constituent SR Policy corresponding to the data packet.

It should be noted that, in some implementations, the method of the present disclosure further includes: the network node sends an SR Policy group to the path computation element or the controller via a Border Gateway Protocol Link-State (BGP-LS) message, where the SR Policy group includes multiple constituent SR Policies, each carrying a mapping relationship between the attribute information and the constituent SR Policy. In other words, the network node reports the mapping relationship between the attribute information and the constituent SR Policy to the path computation element or the controller via the BGP-LS protocol. The path computation element or controller collects the mapping type of the constituent SR Policy and the specific mapping relationship between the constituent SR Policy and the mapping type through the BGP-LS extension, in order to meet the management requirements of the path computation element or the controller.

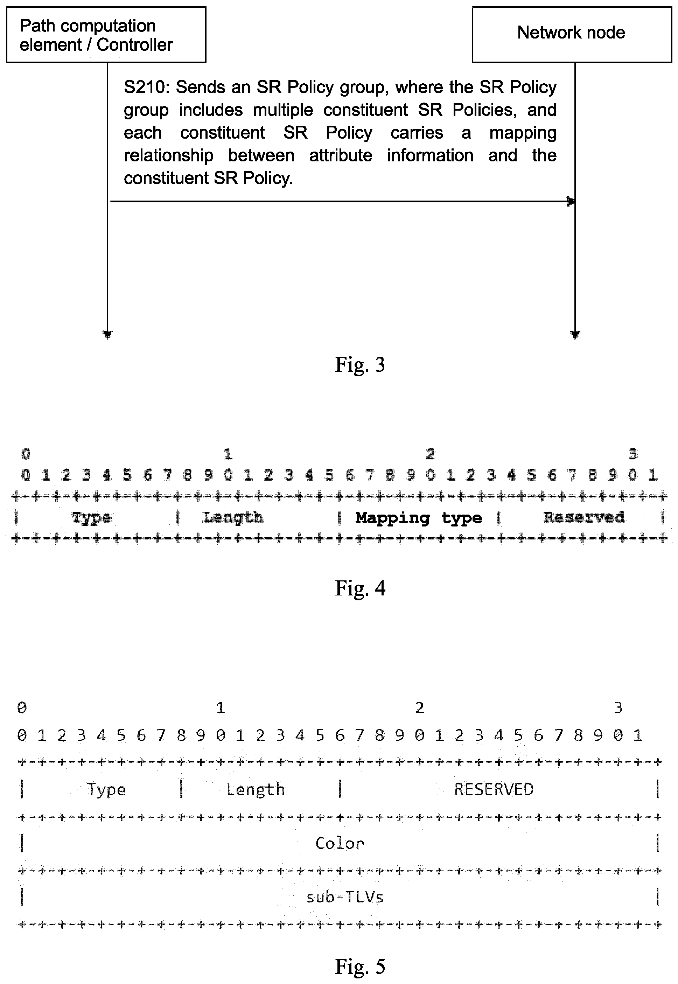

Refer to Fig. 3, which is a flowchart of an information processing method provided in an embodiment of the present disclosure. The method includes the following steps:
In a step of S210, a path computation element or a controller sends a Segment Routing (SR) Policy group to a network node, where the SR Policy group includes multiple constituent SR Policies, and each constituent SR Policy carries a mapping relationship between attribute information and the constituent SR Policy.

In some implementations, the mapping relationship between the attribute information and the constituent SR Policy includes: mapping type information and mapping attribute relationship information, where the mapping type information indicates the mapping type of the constituent SR Policy, and the mapping attribute relationship information indicates the relationship between the constituent SR Policy and the mapping type.

It should be understood that the attribute information can include any of the following: source MAC, destination MAC, VLAN, TOS, source IP, destination IP, DSCP, port number, application layer attributes, or service-class. These attributes correspond to one or more mapping types, where the source MAC, destination MAC, VLAN, TOS, source IP, destination IP, port number, or application layer attributes can each be mapped to a constituent SR Policy via an index. That is, for the above types of attribute information, an index is first established for the attribute information, and then the mapping relationship to the constituent SR Policy is created via the index. For DSCP or service-class type attribute information, the mapping relationship can be established directly between the attribute information and the constituent SR Policy.

As a possible implementation, the step S210 of sending the SR Policy to the network node by the path computation element or the controller includes: the path computation element or the controller sends the SR Policy to the network node via BGP, where the BGP includes an SR Policy Sub-Type Length Value (SR Policy Sub-TLV) and a Composite Sub-TLV corresponding to the constituent SR Policy.

In some implementations, the SR Policy Sub-TLV contains the mapping type information of the constituent SR Policy. Fig. 4 illustrates the format of the SR Policy Sub-TLV. As shown in Fig. 4, the SR Policy Sub-TLV includes the following fields: Type, Length, Mapping Type, and Reserved. The Mapping Type field stores the mapping type information, with a length of 8 bits.

In some implementations, the Composite Sub-TLV contains a Sub-TLV, and the Sub-TLV contains the mapping attribute relationship information. Fig. 5 illustrates the format of the Composite Sub-TLV. The Composite Sub-TLV includes the following fields: Type, Length, Reserved, Color, and at least one Sub-TLV. The Sub-TLV stores the mapping attribute relationship information, and the Color field carries the color information associated with the constituent SR Policy.

In some implementations, the mapping type information of the constituent SR Policy indicates a load balancing type, and the mapping attribute relationship information in the Sub-TLV indicates the load balancing weight value mapped to the constituent SR Policy. It can be understood that, when implementing load sharing based on composite candidate paths, each constituent SR Policy can share the traffic based on the load balancing weight value.

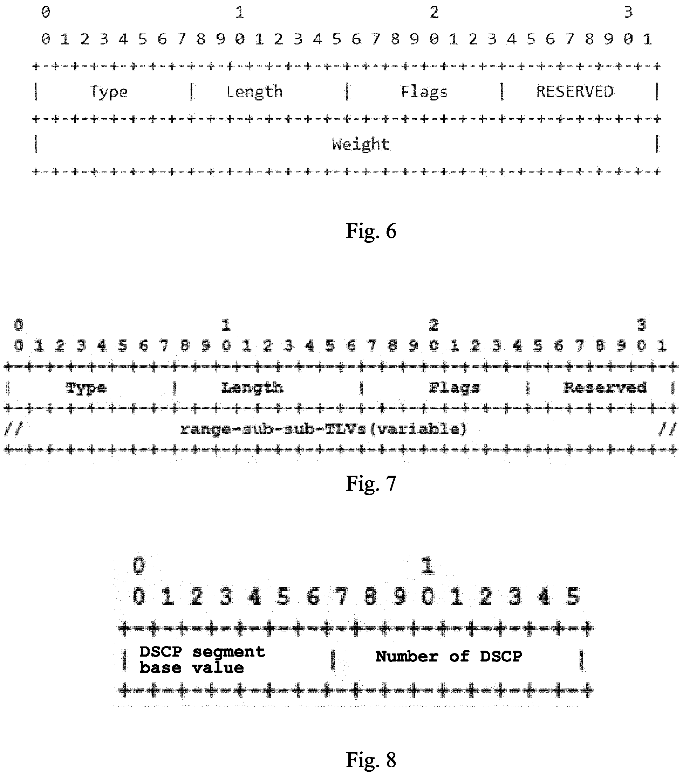

Refer to Fig. 6, which illustrates a format diagram of a Sub-TLV configured to carry a load balancing weight value. As shown in Fig. 6, the Sub-TLV includes the fields: Type, Length, Flags, Reserved, and Weight, where the Weight field is configured to store the load balancing weight value, and its length is 32 bits.

In some implementations, the mapping type information of the constituent SR Policy indicates a Differentiated Services Code Point (DSCP) type, and the corresponding mapping attribute relationship information in the Sub-TLV indicates the DSCP range mapped to the constituent SR Policy.

In some implementations, the DSCP range mapped to the constituent SR Policy includes one or more DSCP segments.

Refer to Fig. 7, which illustrates a format diagram of a Sub-TLV configured to carry DSCP segments. As shown in Fig. 7, the Sub-TLV contains one or more Range Sub-sub-TLV fields, with each Range Sub-sub-TLV being configured to indicate a DSCP segment. It can be understood that each constituent SR Policy can be mapped to one or more DSCP segments, and the DSCP segments are carried in the form of Range Sub-sub-TLVs. A DSCP Sub-TLV can carry one or more Range Sub-sub-TLVs.

Refer to Fig. 8, which shows a format diagram of a Range Sub-sub-TLV. The Range Sub-sub-TLV shown in Fig. 8 contains the DSCP segment base value and the number of DSCPs. The DSCP segment base value represents the first DSCP number in the DSCP segment range.

In other embodiments, the Range Sub-sub-TLV contains the start and end DSCP numbers of the DSCP segment.

In some implementations, the mapping type information of the constituent SR Policy indicates a CBTS type, and the corresponding mapping attribute relationship information in the Sub-TLV indicates a service-class mapped to the constituent SR Policy.

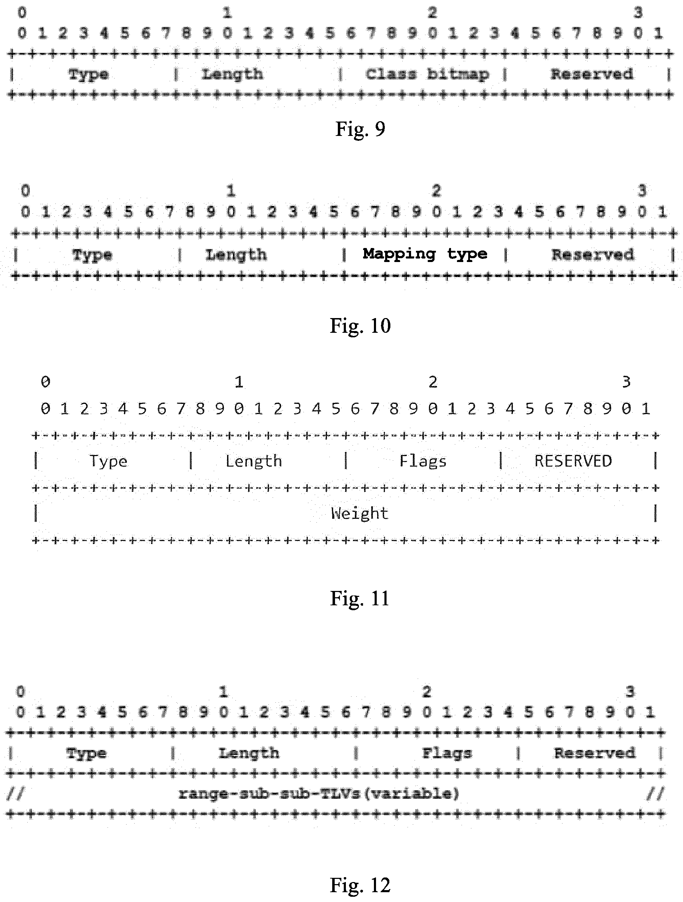

Refer to Fig. 9, which illustrates a format diagram of a Sub-TLV configured to carry service-class information. As shown in Fig. 9, the Sub-TLV contains a Class Bitmap field, the length of which is 8 bits, with each bit corresponding to a service-class. In practical applications, based on which bit in the Class Bitmap field is set to "1," the corresponding service-class can be determined.

In another possible implementation, in the step S210, the path computation element or the controller sends the SR Policy to the network node, including: the path computation element or the controller sends the SR Policy group to the network node via a PCEP message, where the PCEP message contains an SR Policy Association Object and a Path Attribute Object corresponding to the constituent SR Policy; the SR Policy Association Object contains the mapping type information of the constituent SR Policy; the SR Policy Association Object or the Path Attribute Object contains at least one Sub-TLV, and the Sub-TLV contains mapping attribute relationship information.

Refer to Fig. 10, which illustrates a format diagram of an SR Policy Association Object. The SR Policy Association Object contains the mapping type information of the constituent SR Policy. As shown in Fig. 10, the SR Policy Association Object includes the following fields: Type, Length, Mapping Type, and Reserved. The Mapping Type field is configured to store the mapping type information, with a length of 8 bits.

In some implementations, the mapping type information of the constituent SR Policy indicates a load balancing type, and the corresponding mapping attribute relationship information in the Sub-TLV indicates the load balancing weight value mapped to the constituent SR Policy.

Refer to Fig. 11, which illustrates a format diagram of a Sub-TLV configured to carry a load balancing weight value. As shown in Fig. 11, the Sub-TLV includes the following fields: Type, Length, Flags, Reserved, and Weight, where the Weight field is configured to store the load balancing weight value, with a length of 32 bits.

In an example, the mapping type information of the constituent SR Policy indicates a DSCP type, and the corresponding mapping attribute relationship information in the Sub-TLV indicates the DSCP range mapped to the constituent SR Policy.

In an example, the DSCP range mapped to the constituent SR Policy includes one or more DSCP segments.

Refer to Fig. 12, which illustrates a format diagram of a Sub-TLV configured to carry DSCP segments. As shown in Fig. 12, the Sub-TLV contains one or more Range Sub-sub-TLV fields, each Range Sub-sub-TLV being configured to indicate a DSCP segment. It can be understood that each constituent SR Policy can be mapped to one or more DSCP segments, and the DSCP segments are carried in the form of Range Sub-sub-TLVs. A DSCP Sub-TLV can carry one or more Range Sub-sub-TLVs.

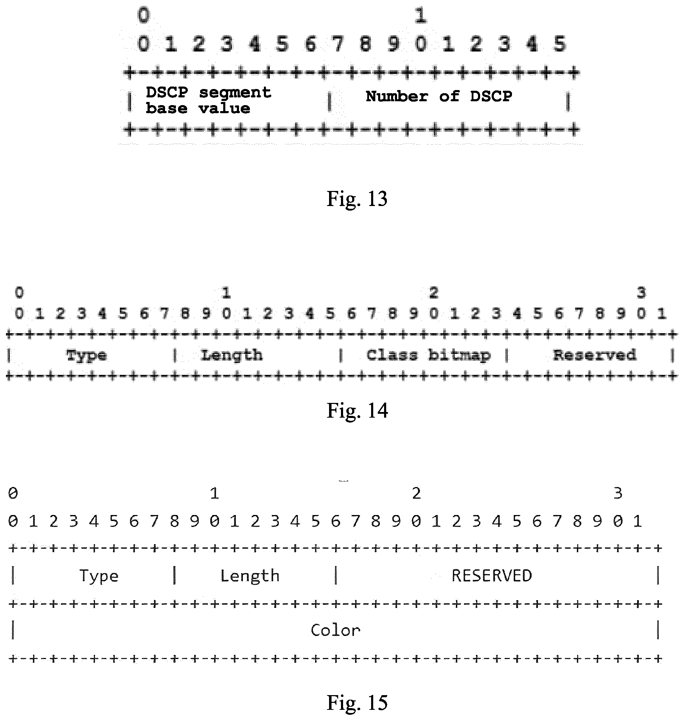

Refer to Fig. 13, which illustrates a format diagram of a Range Sub-sub-TLV. The Range Sub-sub-TLV shown in Fig. 13 contains the DSCP segment base value and the number of DSCPs. The DSCP segment base value represents the first DSCP number in the DSCP segment range.

In some examples, the Range Sub-sub-TLV can also include the DSCP segment start number and the DSCP segment end number.

In an example, the mapping type information of the constituent SR Policy indicates a CBTS type, and the corresponding mapping attribute relationship information in the Sub-TLV indicates the service-class mapped to the constituent SR Policy.

Refer to Fig. 14, which illustrates a format diagram of a Sub-TLV when the mapping attribute relationship information is a service-class. As shown in Fig. 14, the Sub-TLV contains a Class Bitmap field, the length of which is 8 bits, with each bit corresponding to a service-class. In practical applications, based on which bit in the Class Bitmap field is set to "1," the corresponding service-class can be determined.

In some implementations, the SR Policy Association Object or the Path Attribute Object further includes a color field, the color field being configured to carry the color information associated with the constituent SR Policy. The SR Policy Association Object or Path Attribute Object includes a color Sub-TLV, and the color field is located within the color Sub-TLV. The format of the color Sub-TLV can be seen in Fig. 15, where the color Sub-TLV carries the Color information associated with the constituent SR Policy. The tuple <Distinguisher, Policy-Color, Endpoint> is configured to uniquely identify the constituent SR Policy.

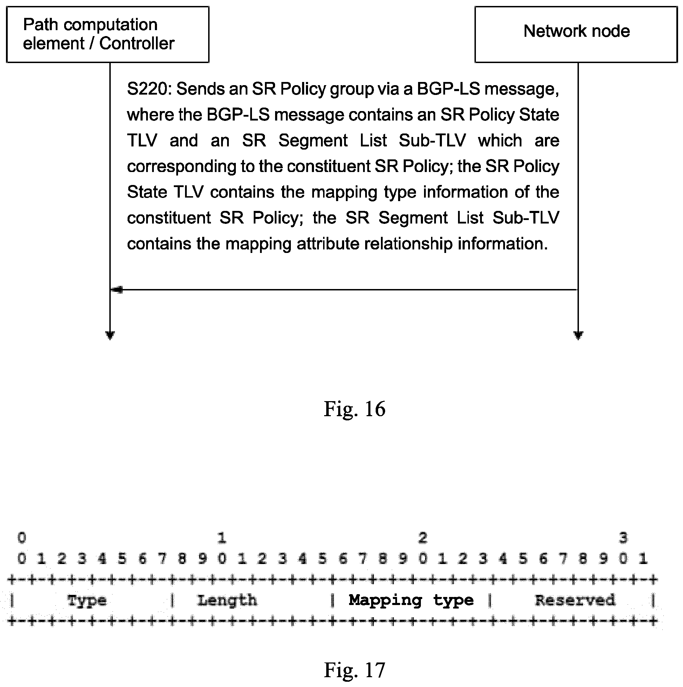

Refer to Fig. 16, the method of the embodiment of the present disclosure further includes the following steps:
In a step of S220, the path computation element or the controller receives the SR Policy group sent by the network node via a BGP-LS message, where the BGP-LS message contains an SR Policy State TLV and an SR Segment List Sub-TLV corresponding to the constituent SR Policy; the SR Policy State TLV contains the mapping type information of the constituent SR Policy; the SR Segment List Sub-TLV contains the mapping attribute relationship information.

That is to say, the network node reports the mapping relationship between the attribute information and the constituent SR Policy to the path computation element or the controller via the BGP-LS protocol. The path computation element or controller collects the mapping type of the constituent SR Policy and the mapping relationship between the constituent SR Policy and a specific mapping type through the BGP-LS extension, to meet the management needs of the path computation element or the controller.

In some implementations, the SR Policy State TLV contains a Link_State Attribute field. Refer to Fig. 17, which shows a format diagram of the Link_State Attribute. The Link_State Attribute field contains the mapping type information of the constituent SR Policy.

In some implementations, the mapping type information of the constituent SR Policy indicates a load balancing type, and the corresponding mapping attribute relationship information in the SR Segment List Sub-TLV indicates the load balancing weight value mapped to the constituent SR Policy.

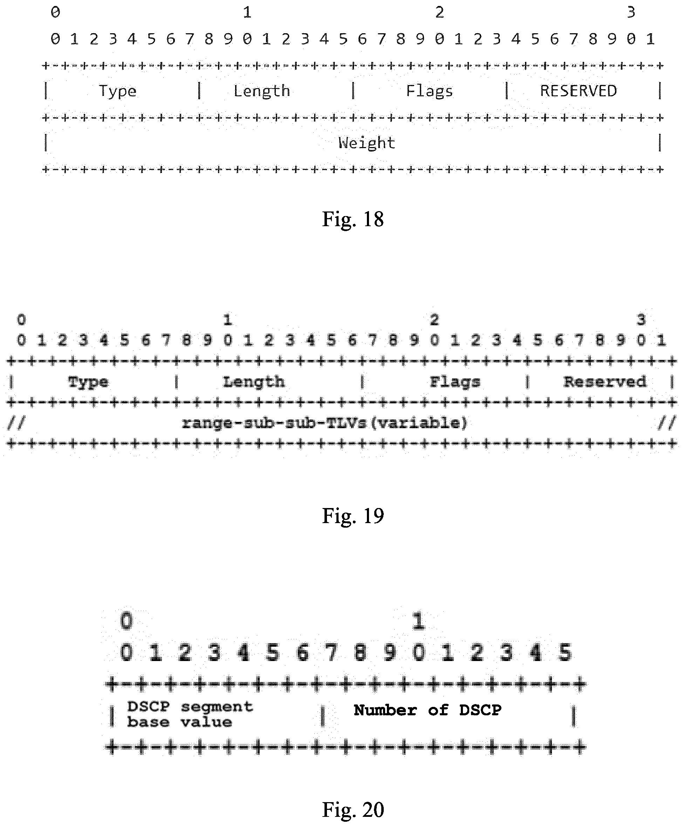

Refer to Fig. 18, which illustrates a format diagram of an SR Segment List Sub-TLV configured to carry a load balancing weight value. As shown in Fig. 18, the SR Segment List Sub-TLV includes the following fields: Type, Length, Flags, Reserved, and Weight, where the Weight field is configured to store the load balancing weight value, with a length of 32 bits.

In an example, the mapping type information of the constituent SR Policy indicates a DSCP type; the corresponding mapping attribute relationship information in the SR Segment List Sub-TLV indicates the DSCP range mapped to the constituent SR Policy.

Refer to Fig. 19, which illustrates a format diagram of an SR Segment List Sub-TLV configured to carry DSCP segments. As shown in Fig. 19, the SR Segment List Sub-TLV contains one or more Range Sub-sub-TLV fields, each Range Sub-sub-TLV being configured to indicate a DSCP segment. It can be understood that each constituent SR Policy can be mapped to one or more DSCP segments, and the DSCP segments are carried in the form of Range Sub-sub-TLVs. A DSCP Sub-TLV can carry one or more Range Sub-sub-TLVs.

In an example, the DSCP range mapped to the constituent SR Policy includes one or more DSCP segments, and the corresponding SR Segment List Sub-TLV carries one or more Range Sub-sub-TLVs, with each Range Sub-sub-TLV being configured to indicate a DSCP segment.

Refer to Fig. 20, which illustrates a format diagram of a Range Sub-sub-TLV. The Range Sub-sub-TLV shown in Fig. 20 contains the DSCP segment base value and the number of DSCPs, where the DSCP segment base value represents the first DSCP number in the DSCP segment range.

In other examples, the Range Sub-sub-TLV can also contain the DSCP segment start number and the DSCP segment end number.

In some implementations, the mapping type information of the constituent SR Policy indicates a CBTS type, and the corresponding mapping attribute relationship information in the SR Segment List Sub-TLV indicates the service-class mapped to the constituent SR Policy.

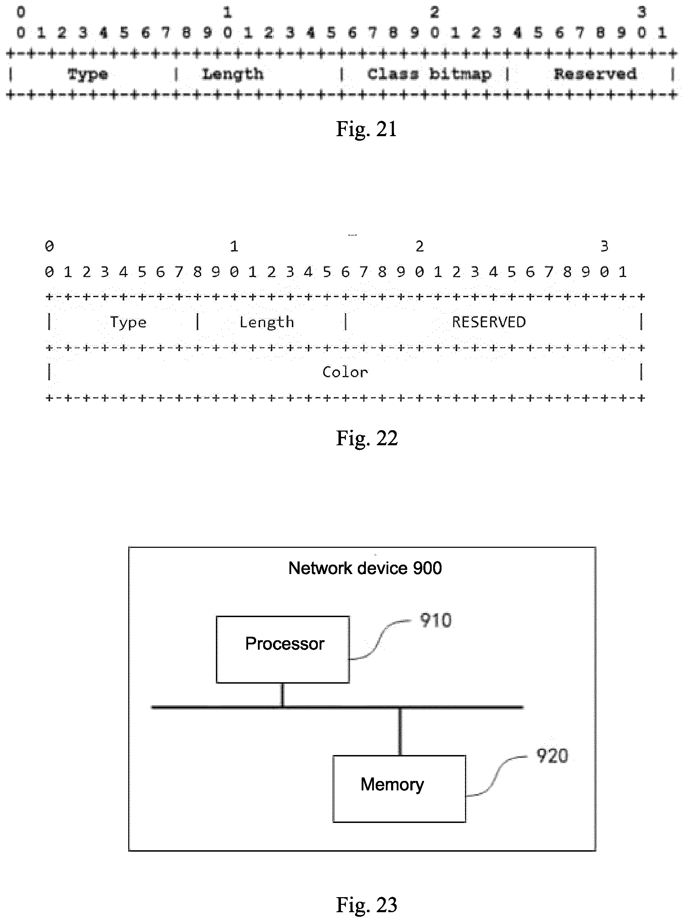

Refer to Fig. 21, which illustrates a format diagram of an SR Segment List Sub-TLV configured to carry service-class information. As shown in Fig. 21, the SR Segment List Sub-TLV contains a Class Bitmap field, the length of which is 8 bits, with each bit corresponding to a service-class. In practical applications, the corresponding service-class can be determined based on which bit in the Class Bitmap field is set to "1."

In some examples, the SR Segment List Sub-TLV also includes a color field, the color field being configured to carry the color information associated with the constituent SR Policy. The SR Segment List Sub-TLV includes a color Sub-TLV, where the color field is located within the color Sub-TLV. The format of the color Sub-TLV can be seen in Fig. 22, where the color Sub-TLV carries the color information associated with the constituent SR Policy. The tuple <Distinguisher, Policy-Color, Endpoint> is configured to uniquely identify the constituent SR Policy.

According to the technical schemes of the embodiments of the present disclosure, the path computation element or the controller sends an SR Policy group to the network node, where the SR Policy group includes multiple constituent SR Policies, and each constituent SR Policy carries a mapping relationship between attribute information and the constituent SR Policy. This allows the network node, upon receiving a data packet, to determine the corresponding constituent SR Policy from the preset SR Policy group based on the attribute information carried by the data packet and the mapping relationship between the attribute information and the constituent SR Policy, and then forward the data packet based on the corresponding constituent SR Policy. Therefore, these technical schemes support directing different service flows to different constituent SR Policies.

It should be noted that in various embodiments of the present disclosure, when processing data related to user identity or characteristics, such as user information, user behavior data, user historical data, and user location information, user consent or permission will always be obtained first. Furthermore, the collection, utilization, and processing of this data comply with relevant national and regional laws, regulations, and standards. Additionally, when the embodiment of the present disclosure requires obtaining sensitive personal information of users, individual permission or consent will be obtained from the user through pop-ups or redirecting to a confirmation page, and only after explicit individual permission or consent is obtained, the necessary user-related data will be collected to enable the proper functioning of the embodiment of the present disclosure.

It can also be understood that, although the embodiments of the present disclosure describe the operations in a specific sequence in the figures, this should not be construed as requiring the operations to be executed in the specific order shown or in a serial order, or that all the operations shown must be executed to obtain the desired results. In certain environments, multitasking and parallel processing may be beneficial.

Refer to Fig. 23, the embodiment of the present disclosure also provides a network device, which includes but is not limited to: at least one processor 910; and at least one memory 920 configured to store at least one program. When the at least one program is executed by the at least one processor 910, the information processing method as described in any of the previous embodiments is performed.

It should be understood that the processor 910 and memory 920 can be connected via a bus or other means.

It should be understood that the processor 910 can be a Central Processing Unit (CPU). The processor can also be another general-purpose processor, a Digital Signal Processor (DSP), an Application-Specific Integrated Circuit (ASIC), a Field Programmable Gate Array (FPGA), or other programmable logic devices, discrete gates or transistor logic devices, discrete hardware components, etc. A general-purpose processor may be a microprocessor or any conventional processor. Alternatively, the processor 910 may adopt one or more integrated circuits to execute the relevant programs, thereby implementing the technical schemes provided by the embodiment of the present disclosure.

The memory 920, as a non-transitory computer-readable storage medium, can be configured to store non-transitory software programs and non-transitory computer-executable programs, such as the information processing methods performed by the network device side, as described in any of the embodiments of the present disclosure. The processor 910 executes the non-transitory software programs and instructions stored in the memory 920 to implement the above information processing methods.

The memory 920 can include a program storage area and a data storage area, where the program storage area stores the operating system and at least one application required for the functionality; the data storage area stores data for performing the above-described information processing methods. Additionally, the memory 920 may include high-speed random access memory (RAM) and non-transitory memory, such as at least one disk storage device, flash memory device, or other non-transitory solid-state storage devices. In some implementations, the memory 920 may optionally include remote storage relative to the processor 910, and such remote storage can be connected to the processor 910 via a network. Examples of such networks include but are not limited to the internet, intranet, local area network (LAN), mobile communication networks, and their combinations.

The non-transitory software programs and instructions required to implement the above-described information processing methods are stored in the memory 920, and when executed by one or more processors 910, the information processing methods provided by any embodiment of the present disclosure are performed.

The embodiment of the present disclosure also provides a computer-readable storage medium, where the computer-readable storage medium stores a program executable by a processor. The program is executable by the processor to implement the information processing method described in any of the embodiments above.

The computer storage medium in the embodiment of the present disclosure can be any combination of one or more computer-readable media. A computer-readable medium can be a computer-readable signal medium or a computer-readable storage medium. A computer-readable storage medium can be, but is not limited to, an electrical, magnetic, optical, electromagnetic, infrared, or semiconductor system, device, or component, or any combination thereof. More specific examples (non-exhaustive) of computer-readable storage media include: electrical connections with one or more wires, portable computer disks, hard drives, random access memory (RAM), read-only memory (ROM), erasable programmable read-only memory (EPROM or flash memory), optical fibers, portable compact disk read-only memory (CD-ROM), optical storage devices, magnetic storage devices, or any suitable combination of the above. In this document, a computer-readable storage medium can be any tangible medium that contains or stores a program, which can be utilized or combined with an instruction execution system, device, or component.

A computer-readable signal medium can include data signals that are propagated in baseband or as part of a carrier, where the data signals carry computer-readable program code. These propagated data signals can take various forms, including but not limited to, electromagnetic signals, optical signals, or any suitable combination thereof. A computer-readable signal medium can also be any computer-readable medium other than a computer-readable storage medium, which can send, propagate, or transmit a program for utilization by or in combination with an instruction execution system, device, or component.

The program code contained on the computer-readable medium can be transmitted by adopting any suitable medium, including but not limited to wireless, wired, optical cables, RF, etc., or any suitable combination thereof.

The computer program code for executing the operations of the present disclosure can be w^{r}itten in one or more programming languages or combinations thereof. The programming languages include object-oriented programming languages-such as Java, Smalltalk, C++-as well as conventional procedural programming languages-such as the "C" language or similar programming languages. The program code can be fully executed on the user's computer, partially executed on the user's computer, executed as an independent software package, executed partially on the user's computer and partially on a remote computer, or fully executed on a remote computer or server. In cases involving a remote computer, the remote computer can be connected to the user's computer via any type of network, including local area networks (LAN) or wide area networks (WAN), or the remote computer can be connected to an external computer (for example, by adopting an Internet service provider to connect through the Internet).

The embodiment of the present disclosure also provides a computer program product, which stores program instructions. When the program instructions are executed on the network device, the network device implements the information processing method described in any of the above embodiments.

The above is a detailed description of several embodiments of the present disclosure. However, the present disclosure is not limited to the above embodiments. Those having ordinary skills in the art may make various equivalent modifications or substitutions under shared conditions which are not departing from the scope of the present disclosure. These equivalent modifications or substitutions are included within the scope defined by the present disclosure.

## Claims

1. An information processing method, comprising:
receiving, by a network node, a data packet and obtaining attribute information carried by the data packet;
determining, by the network node, a constituent Segment Routing (SR) Policy corresponding to the attribute information, from a preset SR Policy group, according to a mapping relationship between the attribute information and the constituent SR Policy; and
forwarding, by the network node, the data packet according to the constituent SR Policy corresponding to the attribute information.

2. The method of claim 1, wherein the attribute information carried by the data packet comprises one of: a source Media Access Control (MAC), a destination MAC, a Virtual Local Area Network (VLAN), a Type of Service (TOS), a source Internet Protocol (IP), a destination IP, a Differentiated Services Code Point (DSCP), a port number, an application layer attribute, or a service-class.

3. The method of claim 2, wherein the source MAC, destination MAC, VLAN, TOS, source IP, destination IP, port number, or application layer attribute is mapped to the constituent SR Policy via an index; the DSCP or service-class is directly mapped to the constituent SR Policy.

4. The method of claim 1, wherein the mapping relationship between the attribute information and the constituent SR Policy comprises: mapping type information and mapping attribute relationship information, wherein the mapping type information indicates a mapping type of the constituent SR Policy, and the mapping attribute relationship information indicates a relationship between the constituent SR Policy and the mapping type.

5. The method of claim 4, wherein the mapping type information comprises one of: a load balancing type, a DSCP type, or a Class-of-service Based Tunnel Selection (CBTS) type.

6. The method of claim 1, further comprising:
receiving, by the network node, a SR Policy group from a path computation element or a controller, wherein the SR Policy group comprises a plurality of constituent SR Policies, the constituent SR Policy carries the mapping relationship between the attribute information and the constituent SR Policy.

7. The method of claim 6, wherein the path computation element or the controller sends the SR Policy group to the network node via one of: a Border Gateway Protocol (BGP), a Path Computation Element Protocol (PCEP), or a YANG model.

8. The method of claim 1, further comprising:
sending, by the network node, an SR Policy group to a path computation element or a controller via a BGP Link-State (BGP-LS) message, wherein the SR Policy group comprises a plurality of constituent SR Policies, the constituent SR Policy carries the mapping relationship between the attribute information and the constituent SR Policy.

9. An information processing method, comprising:
sending, by a path computation element or a controller, a Segment Routing (SR) Policy group to a network node, wherein the SR Policy group comprises a plurality of constituent SR Policies, the constituent SR Policy carries a mapping relationship between attribute information and the constituent SR Policy.

10. The method of claim 9, wherein:
the mapping relationship between the attribute information and the constituent SR Policy comprises: mapping type information and mapping attribute relationship information, wherein the mapping type information indicates a mapping type of the constituent SR Policy, and the mapping attribute relationship information indicates a relationship between the constituent SR Policy and the mapping type; and
sending, by the path computation element or the controller, the SR Policy group to the network node comprises:
sending, by the path computation element or the controller, the SR Policy to the network node via a Border Gateway Protocol (BGP), wherein:
the BGP comprises an SR Policy Sub-Type Length Value (Sub-TLV) and a Composite Sub-TLV corresponding to the constituent SR Policy;
the SR Policy Sub-TLV comprises the mapping type information of the constituent SR Policy; and
the Composite Sub-TLV comprises a Sub-TLV, and the Sub-TLV comprises the mapping attribute relationship information.

11. The method of claim 10, wherein the Composite Sub-TLV comprises a color field, and the color field is configured to carry color information associated with the constituent SR Policy.

12. The method of claim 10, wherein:
the mapping type information of the constituent SR Policy indicates a load balancing type; and
the mapping attribute relationship information in the Sub-TLV indicates a load balancing weight value mapped to the constituent SR Policy.

13. The method of claim 10, wherein:
the mapping type information of the constituent SR Policy indicates a Differentiated Services Code Point (DSCP) type; and
the mapping attribute relationship information in the Sub-TLV indicates a DSCP range mapped to the constituent SR Policy.

14. The method of claim 13, wherein:
the DSCP range mapped to the constituent SR Policy comprises one or more DSCP segments; and
the Sub-TLV comprises one or more Range Sub-sub-TLVs, each of the Range Sub-sub-TLVs is configured to indicate one of the DSCP segments.

15. The method of claim 14, wherein:
the Range Sub-sub-TLV comprises a DSCP segment base value and a number of DSCP values; or
the Range Sub-sub-TLV comprises a DSCP segment start number and a DSCP segment end number.

16. The method of claim 10, wherein:
the mapping type information of the constituent SR Policy indicates a Class-of-service Based Tunnel Selection type; and
the mapping attribute relationship information in the Sub-TLV indicates a service-class mapped to the constituent SR Policy.

17. The method of claim 9, wherein:
the mapping relationship between the attribute information and the constituent SR Policy comprises: mapping type information and mapping attribute relationship information, wherein the mapping type information indicates a mapping type of the constituent SR Policy, and the mapping attribute relationship information indicates a relationship between the constituent SR Policy and the mapping type; and
the method further comprises:
receiving, by the path computation element or the controller, the SR Policy group sent by the network node via a Border Gateway Protocol Link-State (BGP-LS) message, wherein:
the BGP-LS message comprises an SR Policy State Type Length Value (TLV) and an SR Segment List Sub-TLV corresponding to the constituent SR Policy;
the SR Policy State TLV comprises the mapping type information of the constituent SR Policy; and
the SR Segment List Sub-TLV comprises the mapping attribute relationship information.

18. The method of claim 17, wherein the SR Policy State TLV comprises a Link_State Attribute field, the Link_State Attribute field comprises the mapping type information of the constituent SR Policy.

19. The method of claim 18, wherein:
the mapping type information of the constituent SR Policy indicates a load balancing type; and
the mapping attribute relationship information in the SR Segment List Sub-TLV indicates a load balancing weight value mapped to the constituent SR Policy.

20. The method of claim 18, wherein:
the mapping type information of the constituent SR Policy indicates a DSCP type; and
the mapping attribute relationship information in the SR Segment List Sub-TLV indicates a DSCP range mapped to the constituent SR Policy.

21. The method of claim 20, wherein:
the DSCP range mapped to the constituent SR Policy comprises one or more DSCP segments; and
the SR Segment List Sub-TLV carries one or more Range Sub-sub-TLVs, each of the Range Sub-sub-TLVs is configured to indicate a DSCP segment.

22. The method of claim 21, wherein:
the Range Sub-sub-TLV comprises a DSCP segment base value and a number of DSCP values; or
the Range Sub-sub-TLV comprises a DSCP segment start number and a DSCP segment end number.

23. The method of claim 18, wherein:
the mapping type information of the constituent SR Policy indicates a Class-of-service Based Tunnel Selection type; and
the mapping attribute relationship information in the SR Segment List Sub-TLV indicates a service-class mapped to the constituent SR Policy.

24. The method of claim 17, wherein the SR Segment List Sub-TLV comprises a color field, the color field is configured to carry color information associated with the constituent SR Policy.

25. The method of claim 9, wherein:
the mapping relationship between the attribute information and the constituent SR Policy comprises: mapping type information and mapping attribute relationship information, wherein the mapping type information indicates a mapping type of the constituent SR Policy, and the mapping attribute relationship information indicates a relationship between the constituent SR Policy and the mapping type; and
sending, by the path computation element or the controller, the SR Policy to the network node comprises:
sending, by the path computation element or the controller, the SR Policy group to the network node via a Path Computation Element Protocol (PCEP) message, wherein:
the PCEP message comprises an SR Policy Association Object and a Path Attribute Object corresponding to the constituent SR Policy;
the SR Policy Association Object comprises the mapping type information of the constituent SR Policy; and
the SR Policy Association Object or the Path Attribute Object comprises a Sub-Type Length Value (Sub-TLV), the Sub-TLV comprises the mapping attribute relationship information.

26. The method of claim 25, wherein:
the mapping type information of the constituent SR Policy indicates a load balancing type; and
the mapping attribute relationship information in the Sub-TLV indicates a load balancing weight value mapped to the constituent SR Policy.

27. The method of claim 25, wherein:
the mapping type information of the constituent SR Policy indicates a DSCP type; and
the mapping attribute relationship information in the Sub-TLV indicates a DSCP range mapped to the constituent SR Policy.

28. The method of claim 27, wherein:
the DSCP range mapped to the constituent SR Policy comprises one or more DSCP segments; and
the Sub-TLV carries one or more Range Sub-sub-TLVs, each Range Sub-sub-TLV is configured to indicate a DSCP segment.

29. The method of claim 28, wherein:
the Range Sub-sub-TLV comprises a DSCP segment base value and a number of DSCP values; or
the Range Sub-sub-TLV comprises a DSCP segment start number and a DSCP segment end number.

30. The method of claim 25, wherein:
the mapping type information of the constituent SR Policy indicates a Class-of-service Based Tunnel Selection type; and
the mapping attribute relationship information in the Sub-TLV indicates a service-class mapped to the constituent SR Policy.

31. The method of claim 25, wherein the SR Policy Association Object or the Path Attribute Object comprises a color field, the color field is configured to carry color information associated with the constituent SR Policy.

32. A network device, comprising:
at least one processor;
at least one memory configured to store at least one program;
wherein the at least one program is configured to implement, when executed by the at least one processor, the information processing method of any one of claims 1 to 31.

33. A computer-readable storage medium storing a program executable by a processor, wherein the program is configured to implement, when executed by the processor, the information processing method of any one of claims 1 to 31.

34. A computer program product, comprising a computer program or computer instructions stored on a computer-readable storage medium, wherein the computer program or computer instructions is readable by and cause a processor of a network device to perform the information processing method of any one of claims 1 to 31.
